# EUROPEAN PATENT APPLICATION

(11) **EP 3 586 953 A1**
(43) Date of publication of application: **01.01.2020**
(21) Application number: 18757902.4
(22) Date of filing: 29.01.2018
(51) Int. Cl.: B01J 19/00, B81B 1/00, B81C 3/00, G01N 37/00

(54) **FLOW CHANNEL CHIP AND METHOD FOR MANUFACTURING FLOW CHANNEL CHIP**

(30) Priority: 22.02.2017 JP 2017031010
(71) Applicant: Alps Alpine Co., Ltd., Tokyo 1458501 (JP)
(72) Inventor: SUZUKI, Yoshimune, Tokyo 145-8501 (JP); SAKAI, Osamu, Tokyo 145-8501 (JP); ISHIBASHI, Setsuo, Tokyo 145-8501 (JP); HIGUCHI, Shingo, Tokyo 145-8501 (JP); TAGUCHI, Yoshihiro, Tokyo 145-8501 (JP)
(74) Representative: Maiwald Patent- und Rechtsanwaltsgesellschaft mbH
(86) International application number: PCT/JP2018/002703
(87) International publication number: WO 2018/155086

(57) **Abstract**

[Object]

To provide a flow path chip in which two members are properly joined to each other and a possibility of damage of a porous body placed inside a processing chamber, which is formed by the two members, is reduced, and to provide a manufacturing method for the flow path chip.

[Solution]

In a flow path chip 10 including a first plate 11, a second plate 12 joined to the first plate 11, and a porous body 41 disposed between the first plate 11 and the second plate 12, the flow path chip 10 having a flow path formed by the first plate 11 and the second plate 12, wherein the flow path includes a storage portion 32 storing the porous body 41, the storage portion 32 is defined by a first surface S1 formed by part of a surface of the first plate 11 and a second surface S2 formed by part of a surface of the second plate 12, at least part of the first surface and at least part of the second surface are each a surface of an easily-deformable layer 321, and the porous body 41 is sandwiched between the first plate and the second plate in a state that at least part of the easily-deformable layer 321 is deformed.

## Description

### Technical Field

The present invention relates to a flow path chip and a manufacturing method for the flow path chip.

### Background Art

A microchannel device is used as a device for mixing, reacting, or separating small amounts of fluids.

Patent Literature (PTL) 1 discloses a microchannel device including a plate-shaped body in which a processing chamber, an inlet path extending to the processing chamber, and an outlet path extending from the processing chamber are formed, and a processing body placed inside the processing chamber, wherein the processing body includes a porous body and a coating layer made of a synthetic resin and enveloping the porous body, the coating layer is in close contact with an inner surface of the processing chamber, and an infiltration port communicating the inlet path and the porous body with each other and an exudation port communicating the porous body and the outlet path with each other are formed in the coating layer.

### Citation List

### Patent Literature

PTL 1: International Publication No. 2013/121889

### Summary of Invention

### Technical Problem

In the microchannel device (flow path chip) disclosed in PTL 1, joining between a first body plate and a second body plate and close contact between the coating layer and the inner surface of the processing chamber need to be certainly ensured such that a solution to be processed reliably passes through the porous body.

However, when a strong pressing force is applied in a heating and pressing step to certainly ensure the joining and the close contact, there is a possibility that the porous body is damaged. On the other hand, when a weak pressing force is applied, there is a possibility that the joining and the close contact are not properly carried out and a fluid leakage is caused.

An object of the present invention is to provide a flow path chip having a structure sandwiching a stored member including a porous body between two members, wherein the two members are properly joined to each other and a possibility of damage of the porous body placed inside a processing chamber (storage portion), which is formed by the two members, is reduced, and to provide a manufacturing method for the flow path chip.

### Solution to Problem

To solve the above-described problem, according to one aspect of the present invention, there is provided a flow path chip including a first plate, a second plate joined to the first plate, and a porous body disposed between the first plate and the second plate, the flow path chip having a flow path formed by the first plate and the second plate, wherein the flow path includes a storage portion storing the porous body, the storage portion is defined by a first surface formed by part of a surface of the first plate and a second surface formed by part of a surface of the second plate, at least part of the first surface and at least part of the second surface are each a surface of an easily-deformable layer, and the porous body is sandwiched between the first plate and the second plate in a state that at least part of the easily-deformable layer is deformed.

In that type of flow path chip, because the porous body is made of a brittle material, the porous body may be damaged within the storage portion in some cases when the porous body is sandwiched to be fixedly held between the first plate and the second plate. However, with the above-described feature that at least part of the first surface and at least part of the second surface, those first and second surfaces defining the storage portion storing the porous body, are each given by the easily-deformable layer, the easily-deformable layer can deform depending on an external shape of the porous body when the porous body is sandwiched to be fixedly held between the first plate and the second plate. Accordingly, damage of the porous body is avoided.

The above-described flow path chip may further include a coating layer disposed between the porous body and the easily-deformable layer and covering the porous body.

When the first plate and the second plate are sandwiched to be fixedly held between the first plate and the second plate, a pressing force applied to the porous body is moderated by the coating layer as well. Hence the possibility of damage of the porous body is reduced in a more stable fashion.

In the above-described flow path chip, the easily-deformable layer may be made of a modified substance formed through modification of at least one of the first plate and the second plate by a modifier.

Since a material constituting the first plate and/or the second plate is part of a direct material of the easily-deformable layer, a problem of peeling-off of the easily-deformable layer is harder to occur. Accordingly, when a fluid is supplied to flow through the flow path, a fluid leakage from an isolated section is harder to occur, and the fluid can more stably pass through the porous body.

In the above-described flow path chip, the first plate and the second plate may include a portion in which both the plates are joined to each other by an adhesive, and the adhesive may be made of the modifier.

In this Description, the term "adhesive" implies a material that contributes to fixing relative positions of (i.e., joining) two members to be joined. The adhesive may form an adhesive layer, and the two to-be-joined members may be joined by the adhesive layer positioned between those two members. Alternatively, at least one of the two to-be-joined members may be modified by the adhesive to form a modified substance, and those two members may be joined by the modified substance. An example of the modified substance is a substance resulting from softening of a material of the to-be-joined members. In this case, softening of at least one of the to-be-joined members increases an anchoring effect with respect to the other member. As a result, the relative positions of the two to-be-joined members can be more easily fixed.

Because the modifier, i.e., the material used to form the easily-deformable layer, and the adhesive, i.e., the material used to join the first plate and the second plate, are common, the number of kinds of substances (constituent substances) used to manufacture the flow path chip can be reduced. In the case of performing a composition analysis by using the flow path chip, the smaller number of kinds of substances constituting the flow path chip implies that the number of substances, which may become impurities in the analysis, is smaller. Accordingly, it is expected that reduction in accuracy of the analysis is suppressed.

In the above-described flow path chip, the first plate and the second plate may be each made of a polyolefin-based material, and the adhesive may contain an alkane.

A member made of a polyolefin-based material can be joined to another member by using an alkane, and the polyolefin-based material can be softened (or modified) by the alkane. Accordingly, when the first plate and the second plate are each made of the polyolefin-based material and a joining material contains the alkane, the joining between the first plate and the second plate can be more reliably obtained, and the easily-deformable layer having effective properties can be more easily formed.

According to another aspect of the present invention, there is provided a manufacturing method for a flow path chip including a first plate having a first recess, a second plate having a second recess and joined to the first plate, and a porous body disposed between the first plate and the second plate, the flow path chip having a flow path formed by the first recess and the second recess, the flow path including a storage portion storing the porous body. The manufacturing method includes a first coating step of coating an adhesive to join the first plate and the second plate on at least one of a to-be-joined surface of the first plate to the second plate and a to-be-joined surface of the second plate to the first plate, a second coating step of coating the adhesive on at least part of a surface of the first recess and at least part of a surface of the second recess, and modifying at least part of the surface of the first recess and the surface of the second recess into a surface of an easily-deformable layer, a loading step of disposing a stored member including the porous body to be positioned in contact with at least one of the surface of the first recess and the surface of the second recess, and a joining step of joining the first plate and the second plate by contacting the to-be-joined surface of the first plate and the to-be-joined surface of the second plate with each other in an opposing relation, forming the flow path, which includes the storage portion storing the stored body, in a state that at least part of the easily-deformable layer is deformed by the stored member, and obtaining the flow path chip.

According to the above-described manufacturing method, since the material used to join the first plate and the second plate and the material used to form the easily-deformable layer are common, an increase in the number of kinds of materials necessary for the manufacturing is suppressed, and the flow path chip including the easily-deformable layer can be efficiently manufactured.

In the above-described manufacturing method, the first coating step and the second coating step may be performed as one step. According to this manufacturing method, since the material used to join the first plate and the second plate and the material used to form the easily-deformable layer are common, an operation of coating the adhesive on the to-be-joined surface of the first plate to the second plate and an operation of coating the adhesive on the surface of the first recess can be performed at the same time or in a continuous manner. Similarly, an operation of coating the adhesive on the to-be-joined surface of the second plate to the first plate and an operation of coating the adhesive on the surface of the second recess can be performed at the same time or in a continuous manner. Thus, the first coating step and the second coating step for the first plate or the second plate can be completed by one coating operation, and operation efficiency in an entire coating process can be increased. As a result, the flow path chip can easily be manufactured.

In the above manufacturing method, characteristics of the formed easily-deformable layer may be controlled by adjusting an amount of the adhesive per unit area coated on the at least part of the surface of the first recess and the surface of the second recess. Because the easily-deformable layer is formed through modification of the material constituting the first plate or the material constituting the second plate, characteristics (such as thickness (depth) and physical properties (softness)) of the formed easily-deformable layer can be controlled by adjusting the amount of the coated adhesive. It is hence possible to easily perform fine control of manufacturing conditions in such a manner as changing the characteristics of the formed easily-deformable layer depending on a shape of the stored member, including the porous body, which is sandwiched between the first plate and the second plate, and reducing the possibility of damage of the porous body in a more stable fashion. Accordingly, the flow path chip having higher quality can be manufactured.

### Advantageous Effects of Invention

According to the present invention, the flow path chip having a structure sandwiching a stored member including the porous body between two members is obtained in which the two members are properly joined to each other and the possibility of damage of the porous body placed inside the storage portion, which is formed by the two members, is reduced. The manufacturing method for the flow path chip is also obtained.

### Brief Description of Drawings

[Fig. 1] Fig. 1 is a plan view schematically illustrating a structure of a flow path chip according to an embodiment of the present invention.
[Fig. 2] Fig. 2 is a sectional view taken along V1-V1 in Fig. 1.
[Fig. 3] Fig. 3 is a sectional view schematically illustrating the function of an easily-deformable layer in the flow path chip according to the embodiment of the present invention.
[Fig. 4] Fig. 4 plots graphs depicting the result of analyses performed using the flow path chip according to the embodiment of the present invention.
[Fig. 5] Fig. 5 plots graphs depicting the result of analyses performed using a comparative flow path chip.
[Fig. 6] Fig. 6 is a flowchart of a manufacturing method for the flow path chip according to the embodiment of the present invention.
[Fig. 7] Fig. 7 is a sectional view schematically illustrating the manufacturing method (stage after preparing plates) for the flow path chip according to the embodiment of the present invention; specifically, Fig. 7(a) is a sectional view of a first plate, and Fig. 7(b) is a sectional view of a second plate.
[Fig. 8] Fig. 8 is a sectional view schematically illustrating the manufacturing method (stage after coating operations in a first coating step and a second coating step) for the flow path chip according to the embodiment of the present invention; specifically, Fig. 8(a) is a sectional view of the first plate, and Fig. 8(b) is a sectional view of the second plate.
[Fig. 9] Fig. 9 is a sectional view schematically illustrating the manufacturing method (stage after the first coating step and the second coating step) for the flow path chip according to the embodiment of the present invention; specifically, Fig. 9(a) is a sectional view of the first plate, and Fig. 9(b) is a sectional view of the second plate.
[Fig. 10] Fig. 10 is a sectional view schematically illustrating the manufacturing method (stage after a loading step) for the flow path chip according to the embodiment of the present invention.
[Fig. 11] Fig. 11 is a sectional view schematically illustrating the manufacturing method (stage after a joining step) for the flow path chip according to the embodiment of the present invention.

### Description of Embodiments

An embodiment of the present invention will be described below with reference to the drawings. It is to be noted that similar constituent elements in the drawings are denoted by the same reference signs and detailed description of those constituent elements is omitted as appropriate.

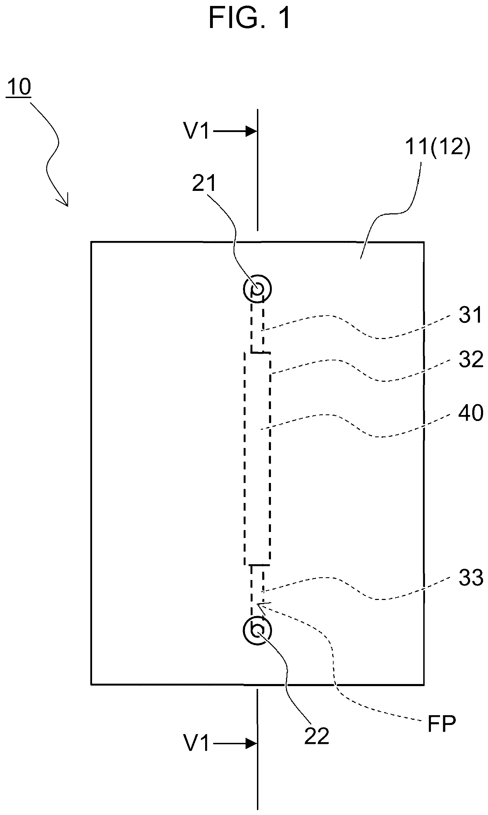

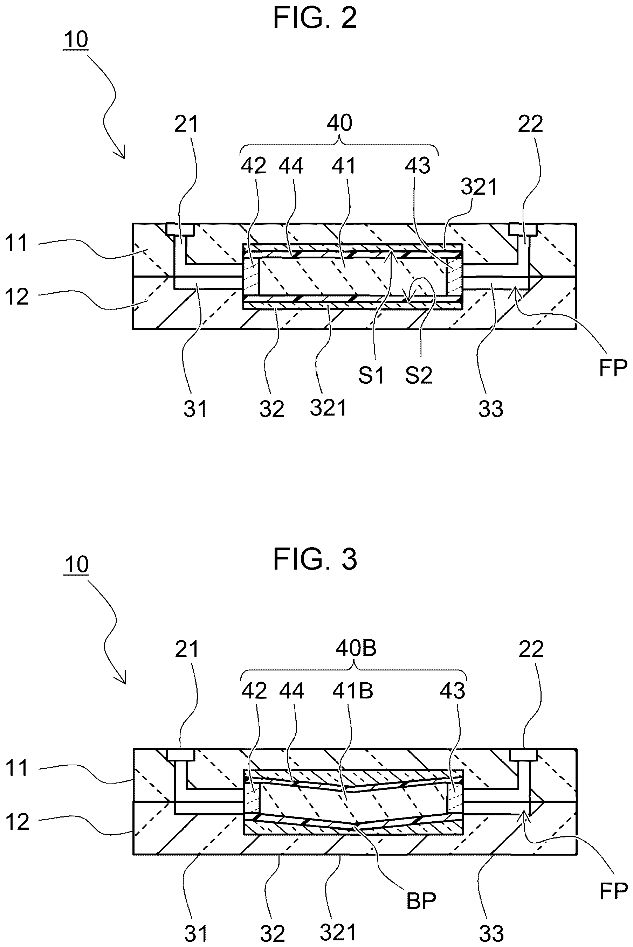

Fig. 1 is a plan view schematically illustrating a flow path chip according to an embodiment of the present invention. Fig. 2 is a sectional view taken along V1-V1 in Fig. 1.

As illustrated in Figs. 1 and 2, the flow path chip 10 according to the first embodiment of the present invention includes a first plate 11 made of an optically-transparent resin material, and a second plate 12 made of the same material as that of the first plate 11 and joined to the first plate 11. The first plate 11 and the second plate 12 in the flow path chip 10 according to this embodiment are each made of suitable one among cycloolefin-containing polyolefins (polyolefin-based materials), such as a cycloolefin polymer (COC) or a cycloolefin copolymer (COP). Examples of other resin materials capable of being used as materials of the plates include polyolefins other than the cycloolefin-containing polyolefins, such as polyethylene (PE) and polypropylene (PE), acrylic resins such as polymethyl methacrylate (PMMA), polycarbonate (PC), and a silicone resin. A filler material such as silica may be dispersed in the first plate 11 and the second plate 12.

The first plate 11 and the second plate 12 are joined to each other by using, as an adhesive, an n-alkane that is one type of alkanes. As mentioned above, the term "adhesive" used in this Description implies a material that contributes to fixing relative positions of (i.e., joining) two members to be joined (here, the first plate 11 and the second plate 12). Accordingly, at least one of the two to-be-joined members may be modified by the adhesive to form a modified substance, and those two members may be joined by the modified substance. In the flow path chip 10 according to this embodiment, one type of alkanes, particularly a linear alkane (n-alkane), is used as a material for forming the modified substance. The carbon number of the n-alkane is not limited to particular one, but it is preferably set to about 5 to 9 in some cases from the viewpoint of high easiness in handling and high strength of joining. Details of a joining method using the n-alkane will be described later.

As illustrated in Figs. 1 and 2, the flow path chip 10 includes a flow path FP formed by the first plate 11 and the second plate 12. More specifically, the flow path FP in the flow path chip 10 is constituted by a first flow path 31 and a second flow path 33 that are formed by a recess formed in the first plate 11 and a recess formed in the second plate 12, an inflow portion 21 extending from an opening formed in a surface of the first plate 11, the surface being positioned on the opposite side to a joined surface of the first plate 11, up to one end portion of the first flow path 31, an outflow portion 22 extending from an opening formed in the surface of the first plate 11, that surface being positioned on the opposite side to the joined surface of the first plate 11, up to one end portion of the second flow path 33, and a storage portion 32 positioned between the other end portion of the first flow path 31 and the other end portion of the second flow path 33, the storage portion 32 being constituted by a recess formed in the first plate 11 and a recess formed in the second plate 12.

A column (processing body) 40 including a porous body 41 is disposed inside the storage portion 32. More specifically, the column 40 is sandwiched between the first plate 11 and the second plate 12.

In the flow path chip 10 according to this embodiment, the porous body 41 providing a stationary phase of the column 40 is a structural body having a monolithic structure and made of mainly silica (silica monolith). Because the silica monolith is a sintered body of silica gel, it is harder than the material (resin material) constituting the first plate 11 and the second plate 12, but is brittle.

The column 40 includes pressure adjustment portions 42 and 43, each having a columnar outer shape, at both ends of the porous body 41 in a flow direction therein. The pressure adjustment portions 42 and 43 have the function of adjusting flow of a fluid (blood as one practical example) flowing through the flow path FP formed in the flow path chip 10. In other words, the pressure adjustment portions 42 and 43 have substantially the same pressure loss as the porous body 41. With the provision of the pressure adjustment portions 42 and 43, the flow of the fluid fed under pressure is adjusted, and disturbance of the fluid passing through the column 40 is suppressed. Furthermore, the pressure adjustment portions 42 and 43 have the functions of a filter and a diffuser, and are made of a material harder than that of the column 40.

The column 40 includes a coating layer 44 positioned so as to cover the porous body 41 and the pressure adjustment portions 42 and 43. The coating layer 44 is made of, for example, a heat-shrinkable resin that is shrunk by heating. The coating layer 44 has the shape of a tube, and the column 40 having a columnar outer shape is formed by placing the porous body 41 and the pressure adjustment portions 42 and 43 into the tube, and by heating them. The type of the heat-shrinkable resin is not limited to particular one. Examples of the heat-shrinkable resin may include a tetrafluoroethylene-hexafluoropropylene copolymer (4, 6-fluorinated ethylene propylene, FEP) and polyetheretherketone (PEEK). In use, when the fluid is supplied from the inflow portion 21 into the storage portion 32 through the first flow path 31, pressure at several MPa or higher is applied to the inside of the column 40. From the viewpoint of making a gap hard to be formed between the porous body 41 and the coating layer 44 even under such a condition, it is preferable to use PEEK as the heat-shrinkable resin. Using PEEK as the heat-shrinkable resin enables an analysis to be properly performed in some cases even when supply pressure of the fluid exceeds 10 MPa.

A first surface S1 among surfaces defining the recess of the first plate 11 constituting the storage portion 32, the first surface S1 being positioned to face the second plate 12, and a second surface S2 among surfaces defining the recess of the second plate 12 constituting the storage portion 32, the second surface S2 being positioned to face the first plate 11, are each a surface of an easily-deformable layer 321 (see Fig. 2). The "easily-deformable layer" in this Description is made of a material softer than that used for the first plate 11 and the second plate 12 both constituting the flow path FP of the flow path chip 10 (i.e., softer than the cycloolefin-containing polyolefin in the flow path chip 10 according to this embodiment). In a state in which the column 40 including the porous body 41 is disposed in the storage portion 32, therefore, the easily-deformable layer is preferentially deformed, thus reducing a possibility that an external force at a level damaging the porous body 41 is applied to the porous body 41.

Fig. 3 is a sectional view schematically illustrating the function of the easily-deformable layer in the flow path chip 10 according to the embodiment of the present invention. For easier understanding of explanation, a bent portion BP of a column 40B is illustrated in an exaggerated manner. Because, as mentioned above, the porous body 41 is a structural body made of mainly a sintered body of silica gel, the porous body 41 is often deformed during sintering. Thus, the porous body 41 included in the column 40B illustrated in Fig. 3 has a shape being not straight but bent. When the column 40B has such a bent outer shape, the entirety of the column 40B also has a shape including the bent portion BP, which is deviated from the straight, even in a state covered with the coating layer 44. In the column 40B illustrated in Fig. 3, the bent portion BP is positioned on the side facing the second plate 12.

When the storage portion 32 of the flow path chip 10 does not include the easily-deformable layer 321, the bent portion BP of the column 40B is brought into direct contact with the material of the second plate 12 (i.e., the cycloolefin-containing polyolefin in the flow path chip 10 according to this embodiment). Because the recess formed in the second plate 12 and defining the storage portion 32 has a shape not corresponding to the bent portion BP of the column 40B, contact pressure at the bent portion BP is relatively high in the column 40B sandwiched between the first plate 11 and the second plate 12 in the storage portion 32. When a large external force is applied in accordance with the contact pressure, the column 40B may be damaged in the bent portion BP. If the column 40B is damaged, the flow path chip 10 can no longer fulfill the purpose of analyzing the fluid with the aid of the column 40B. Thus, pressure under which the first plate and the second plate are held in a sandwiched state (i.e., joining pressure) needs to be reduced in order to obtain the flow path chip 10 capable of performing the analysis with the aid of the column 40B including the bent portion BP illustrated in Fig. 3. When the joining pressure is reduced as described above, an upper limit of allowable pressure applied to the inside of the flow path FP of the flow path chip 10 is also reduced, thus causing a problem of reduction in analysis speed.

In contrast, in the flow path chip 10 according to this embodiment, the first surface S1 and the second surface S2 of the storage portion 32 are each the surface of the easily-deformable layer 321. Therefore, the bent portion BP of the column 40B comes into contact with the easily-deformable layer 321 on the side closer to the second surface S2. In a contact portion, the easily-deformable layer 321 is preferentially deformed, and the external force applied to a porous body 41B, which is positioned in the bent portion BP of the column 40B is moderated. Moreover, because the easily-deformable layer 321 is also preferentially deformed in portions other than the bent portion BP, uniformity of the pressure applied to the column 40B in the storage portion 32 can be increased. Such an increase in uniformity of the pressure applied to the column 40B contributes to increasing accuracy of the analysis using the column 40B. In more detail, the coating layer 44 covering the porous body 41B can make the storage portion 32 of the flow path chip 10 and the porous body 41 held in a more closely contact state with a smaller gap between them. As a result, when the fluid is supplied to flow through the flow path FP of the flow path chip 10, it is possible to reduce a possibility of causing the problem that the fluid leaks through a joined interface between the first plate 11 and the second plate 12, and to allow the fluid to more stably pass through the porous body 41.

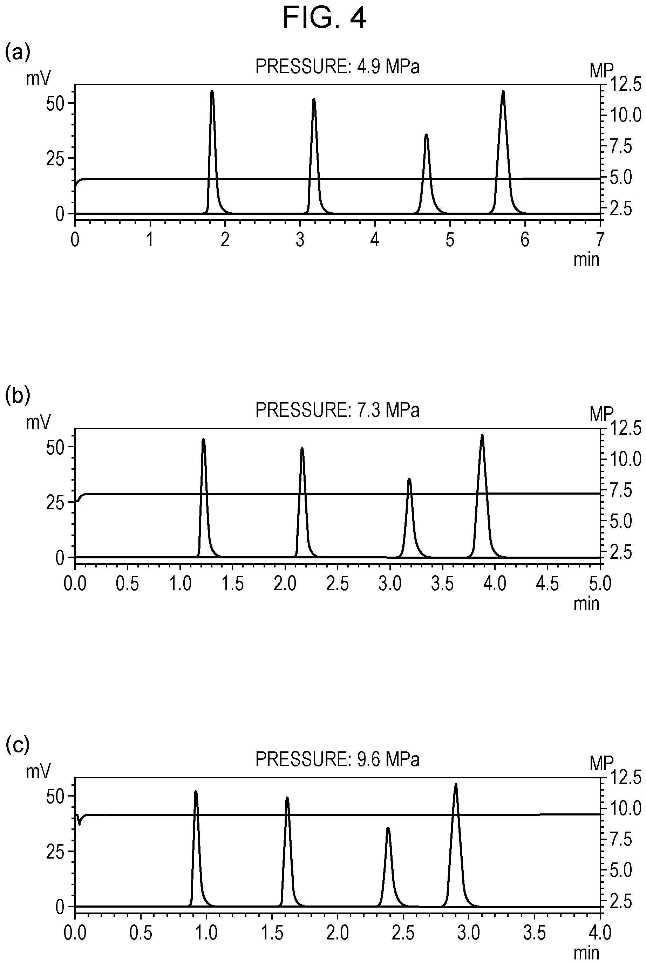

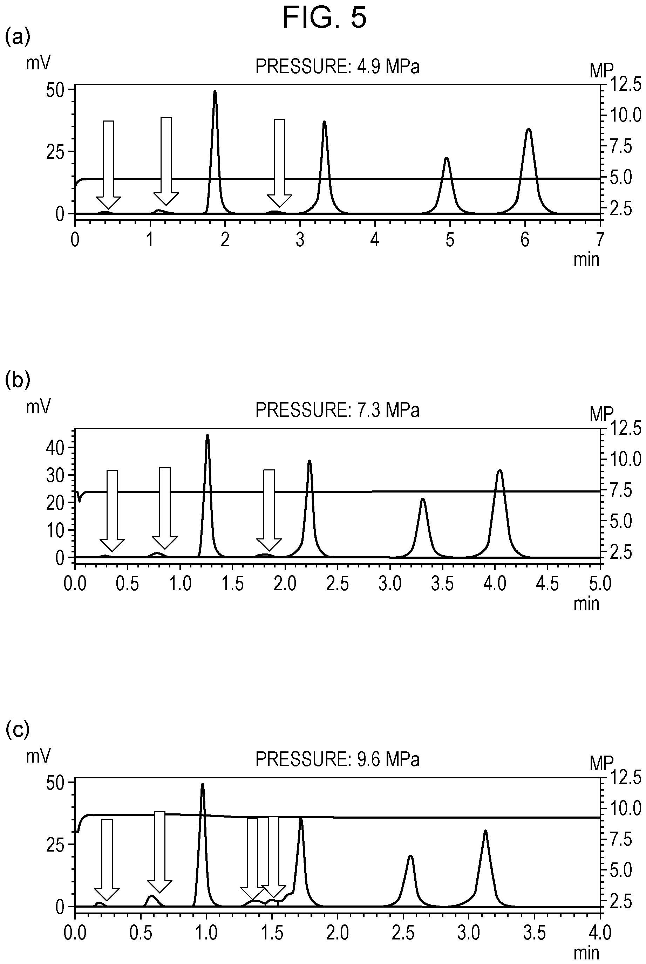

In this regard, Fig. 4 depicts the result of analyses performed using the flow path chip 10 that includes the easily-deformable layers 321, and Fig. 5 depicts the result of analyses performed using a comparative flow path chip that does not include the easily-deformable layers 321. In the case of using the flow path chip 10 that includes the easily-deformable layers 321, as depicted in Fig. 4, the analysis is properly performed even under high pressure at about 10 MPa, and four peaks are detected. On the other hand, in the case of using the comparative flow path chip that does not include the easily-deformable layers 321, as depicted in Fig. 5, three peaks (denoted by voided arrows), which are not measured in the case of using the flow path chip 10, are detected even from a low-pressure stage of about 5 MPa, and the number of those peaks becomes four when liquid feed pressure is increased to about 10 MPa. Those peaks are attributable to the fact that the fluid to be measured flows through gaps between surfaces of the storage portion 32, which are made of the material (cycloolefin-containing polyolefin) constituting the first plate 11 and the second plate 12, and the column 40B. As seen from the above-described result, an increase in accuracy of measurement is realized with the flow path chip 10 according to this embodiment.

As mentioned above, the material of the easily-deformable layer 321 is not limited insofar as it is softer than the material constituting the first plate 11 and the second plate 12. In the flow path chip 10 according to the embodiment of the present invention, however, the easily-deformable layer 321 is preferably made of the modified substance that is formed through modification of each of the first plate 11 and the second plate 12 by a modifier. In other words, the material constituting the first plate 11 and the second plate 12 (i.e., the cycloolefin-containing polyolefin in the flow path chip 10 according to this embodiment) is preferably part of a direct material of the easily-deformable layer 321. The above point will be described in more detail below.

First, a problem attributable to the presence of the easily-deformable layer 321 at a position where it is not to be present is less apt to occur. When the easily-deformable layer 321 is additionally disposed as a separate member on the first plate 11 and/or the second plate 12 (by printing as one of practical means) instead of utilizing the modification, the easily-deformable layer 321 is formed at the position where it is not to be present, if a misalignment occurs in a step of disposing the easily-deformable layer 321. The easily-deformable layer 321 disposed at the position where it is not to be present is interposed between the first plate 11 and the second plate 12 to be joined to each other, thus causing a possibility of adversely affecting the joining between both the plates. In contrast, when the easily-deformable layer 321 is formed by utilizing the modification, there is no possibility that a problem is caused due to the presence of the separately-disposed member between the first plate 11 and the second plate 12 to be joined to each other.

Furthermore, a problem of peeling-off of the easily-deformable layer 321 from each of the first plate 11 and the second plate 12 is less apt to occur. If the peeling-off of the easily-deformable layer 321 occurs, the fluid is difficult to stably pass through the porous body 41 in some cases when the fluid is supplied into the flow path FP of the flow path chip 10.

In the flow path chip 10 according to this embodiment, the modifier used to form the easily-deformable layer 321 is made of an n-alkane that is the above-mentioned adhesive used to join the first plate 11 and the second plate 12. As described above, the n-alkane modifies the material constituting the first plate 11 and the second plate 12 and increases strength of joining between both the plates. The modified substance formed by the n-alkane has low mechanical characteristics, namely it is relatively soft. Therefore, the modified substance is preferable as the material of the easily-deformable layer 321. Because the modifier, i.e., the material used to form the easily-deformable layer 321, and the adhesive, i.e., the material used to join the first plate 11 and the second plate 12, are common, the number of kinds of substances (constituent substances) used to manufacture the flow path chip 10 can be reduced. In the case of performing a composition analysis by using the flow path chip 10, the smaller number of kinds of substances constituting the flow path chip 10 implies that the number of substances, which may become impurities in the analysis, is smaller. Accordingly, it is expected that reduction in accuracy of the analysis is suppressed by using the flow path chip 10 according to this embodiment.

A manufacturing method for the flow path chip 10 according to this embodiment is not limited. The flow path chip 10 can be efficiently manufactured by using the manufacturing method described below.

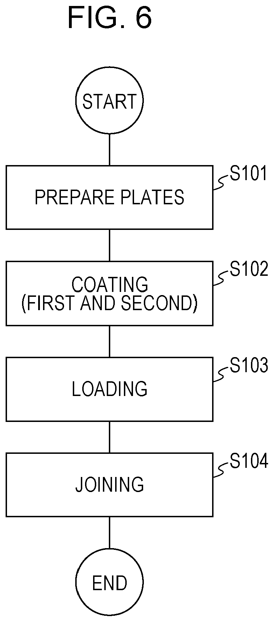

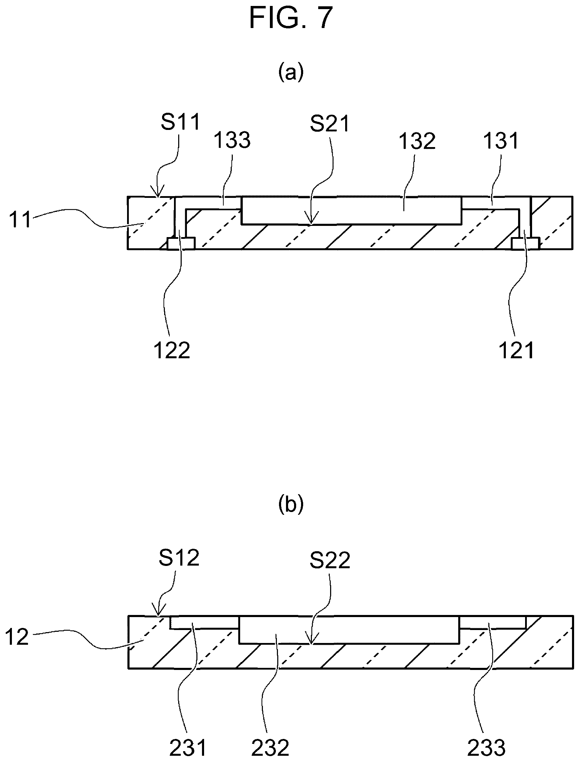

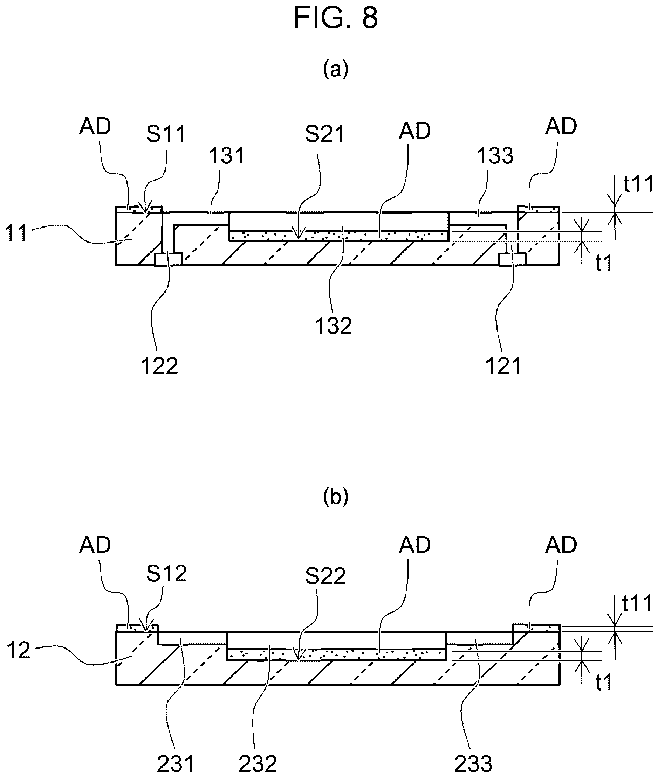

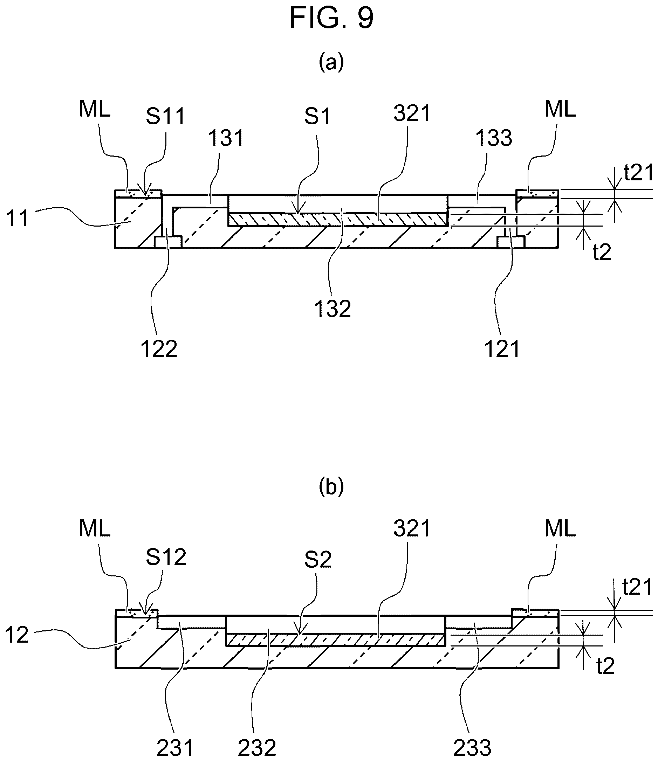

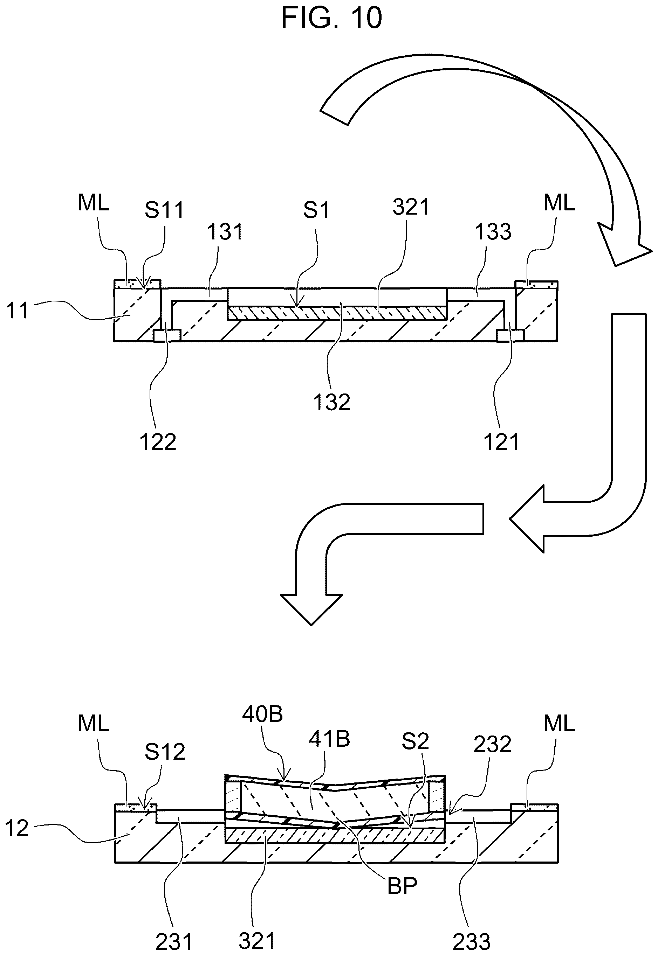

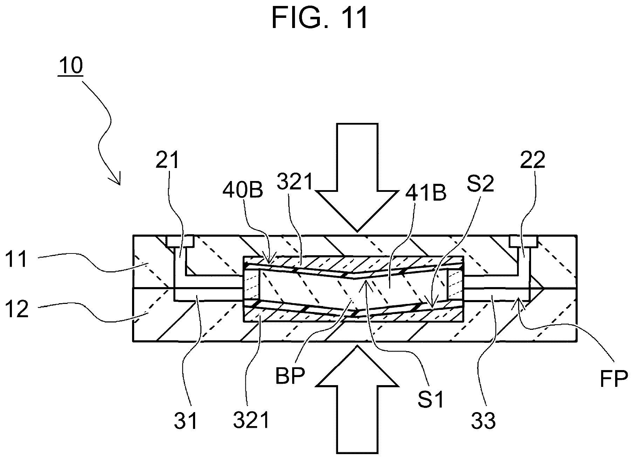

Fig. 6 is a flowchart of a manufacturing method for the flow path chip 10 according to the embodiment of the present invention. Fig. 7 is a sectional view schematically illustrating the manufacturing method (stage after preparing plates) for the flow path chip 10 according to the embodiment of the present invention; specifically, Fig. 7(a) is a sectional view of the first plate, and Fig. 7(b) is a sectional view of the second plate. Fig. 8 is a sectional view schematically illustrating the manufacturing method (stage after coating operations in a first coating step and a second coating step) for the flow path chip 10 according to the embodiment of the present invention; specifically, Fig. 8(a) is a sectional view of the first plate, and Fig. 8(b) is a sectional view of the second plate. Fig. 9 is a sectional view schematically illustrating the manufacturing method (stage after the first coating step and the second coating step) for the flow path chip 10 according to the embodiment of the present invention; specifically, Fig. 9(a) is a sectional view of the first plate, and Fig. 9(b) is a sectional view of the second plate. Fig. 10 is a sectional view schematically illustrating the manufacturing method (stage after a loading step) for the flow path chip 10 according to the embodiment of the present invention. Fig. 11 is a sectional view schematically illustrating the manufacturing method (stage after a joining step) for the flow path chip 10 according to the embodiment of the present invention. For easier understanding of explanation, Figs. 10 and 11 illustrate the case of including the column 40B (described above) which has been deformed during sintering. However, the present invention is not limited to that case, and the column 40B may be the column 40 instead.

In the manufacturing method for the flow path chip 10 according to the embodiment of the present invention, as illustrated in Fig. 6, the flow path chip 10 is manufactured through steps of preparing the first plate 11 and the second plate 12 to be joined to each other (S101), coating an n-alkane on both the plates (S102), loading the column 40B (S103), and joining the first plate 11 and the second plate 12 to each other (S104).

As illustrated in Fig. 7(a), the first plate 11 includes a through-hole 121 corresponding to the inflow portion 21, a through-hole 122 corresponding to the outflow portion 22, a recess 131 forming the first flow path 31, a recess 133 forming the second flow path 33, and a first recess 132 that is a recess forming the storage portion 32.

As illustrated in Fig. 7(b), the second plate 12 includes a recess 231 forming the first flow path 31, a recess 233 forming the second flow path 33, and a second recess 232 that is a recess forming the storage portion 32.

A method of preparing the first plate 11 and the second plate 12 is not limited. The first plate 11 and the second plate 12 may be obtained by molding such as injection molding. Alternatively, the first plate 11 and the second plate 12 may be formed by carrying out machining, such as grooving and drilling, on plate-like members. The molding and the machining may be carried out in a combined manner.

After preparing the first plate 11 and the second plate 12 (S101), as illustrated in Fig. 7, the first plate 11 and the second plate 12 are arranged such that their surfaces to be joined (called a to-be-joined surface S11 and a to-be-joined surface S12 hereinafter) are positioned to face upward. The first plate 11 and the second plate 12 are constituted such that, when they are arranged with the to-be-joined surface S11 and the to-be-joined surface S12 facing upward, a surface S21 of the first recess 132 and a surface S22 of the second recess 232 are also positioned to face upward.

Then, as illustrated in Figs. 8(a) and 8(b), an adhesive AD made of an n-alkane is coated on the to-be-joined surfaces S11 and S12, the surface S21 of the first recess 132, and the surface S22 of the second recess 232. At that time, the adhesive AD can be coated at a desired place in a desired amount by using an ink jet device or a dispenser. In the manufacturing method according to the embodiment of the present invention, the amount of the adhesive AD coated on each of the surface S21 of the first recess 132 and the surface S22 of the second recess 232 is larger than that of the adhesive AD coated on each of the to-be-joined surfaces S11 and S12. Thus, as illustrated in Fig. 8(a), a thickness t1 of the adhesive AD coated on the surface S21 of the first recess 132 is thicker than a thickness t11 of the adhesive AD coated on the to-be-joined surface S11. As illustrated in Fig. 8(b), a thickness t1 of the adhesive AD coated on the surface S22 of the second recess 232 is also thicker than a thickness t11 of the adhesive AD coated on the to-be-joined surface S12.

As illustrated in Figs. 9(a) and 9(b), therefore, a thickness t2 of a modified layer (easily-deformable layer 321) formed in each of the first plate 11 and the second plate 12 is thicker than a thickness t12 of a modified layer ML formed on each of the to-be-joined surfaces S11 and S12 (S102). As a result, the easily-deformable layer 321 made of the modified layer formed on each of the first plate 11 and the second plate 12 can exhibit proper mechanical characteristics (softness) and can reduce a possibility that the column 40B may be damaged in the joining step.

Here, in at least part of the surface S21 of the first recess 132 and the surface S22 of the second recess 232, it is preferable to adjust the amount of the coated adhesive AD per unit area, and to control characteristics of the formed easily-deformable layer 321. In other words, because the easily-deformable layer 321 is formed through modification of the material constituting the first plate 11 or the material constituting the second plate 12 caused by the adhesive AD, the characteristics (such as thickness (depth) and physical properties (softness)) of the formed easily-deformable layer 321 can be controlled by adjusting the amount of the coated adhesive AD. It is hence possible to easily perform fine control of manufacturing conditions in such a manner as changing the characteristics of the formed easily-deformable layer 321 depending on a shape of the stored member (column 40B), including the porous body 41, which is sandwiched between the first plate 11 and the second plate 12, and reducing a possibility of damage of the porous body 41 in a more stable fashion. Accordingly, the flow path chip 10 having higher quality can be manufactured.

After forming the easily-deformable layer 321, as illustrated in Fig. 10, the column 40B is placed in contact with the second surface S2 of the second recess 232 in the second plate 12 (S103). In this stage, deformation of the easily-deformable layer 321 is within a limited range.

Thereafter, the first plate 11 including the easily-deformable layer 321 formed therein is placed on and contacted with the second plate 12 such that the to-be-joined surfaces S11 and S12 are positioned to face each other. Then, as illustrated in Fig. 11, the first plate 11 and the second plate 12 are joined to each other at the to-be-joined surfaces S11 and S12 (S104). Contact conditions are set as appropriate. To explain by way of a non-restrictive example, the first plate 11 and the second plate 12 are joined to each other by holding both the plates in the contact state under a pressing force of 0.5 MPa to 5 MPa for 5 minutes to 30 minutes in an environment of 100°C to 150°C. At that time, considerable pressure is applied to between the column 40B and each easily-deformable layer 321. However, since the easily-deformable layer 321 is preferentially deformed as described above, application of an external force at such a level as damaging the porous body 41B in the column 40B is avoided.

Thus, the flow path FP which includes the storage portion 32 storing the column 40B is formed in such a state that at least part of the easily-deformable layer 321 is deformed by the column 40B, whereby the flow path chip 10 is obtained.

According to the above-described manufacturing method, since the material used to join the first plate 11 and the second plate 12 and the material used to form each easily-deformable layer 321 are common (i.e., the adhesive AD made of an n-alkane), an increase in the number of kinds of materials necessary for the manufacturing is suppressed, and the flow path chip 10 including the easily-deformable layer 321 can be efficiently manufactured.

Furthermore, according to the above-described manufacturing method, the first coating step of coating the adhesive AD on the to-be-joined surfaces S11 and S12 and the second coating step of coating the adhesive AD on the surface S21 of the first recess 132 and the surface S22 of the second recess 232 are performed as one step. Since the material used to join the first plate 11 and the second plate 12 and the material used to form each easily-deformable layer 321 are common (i.e., the adhesive AD), an operation of coating the adhesive AD on the to-be-joined surface S11 and an operation of coating the adhesive AD on the surface S21 of the first recess 132 in the first plate 11 can be performed at the same time or in a continuous manner. Similarly, an operation of coating the adhesive AD on the to-be-joined surface S12 and an operation of coating the adhesive AD on the surface S22 of the second recess 232 in the second plate 12 can be performed at the same time or in a continuous manner. Thus, the first coating step and the second coating step for the first plate 11 or the second plate 12 can be completed by one coating operation, and operation efficiency in an entire coating process can be increased. As a result, the flow path chip 10 can easily be manufactured.

The embodiments and the application examples have been described above, but the present invention is not limited to those embodiments and examples. For instance, other forms resulting from not only appropriately modifying the embodiments and the application example through addition, deletion, and design change of constituent elements by those skilled in the art, but also appropriately combining features of the embodiments with each other also fall within the scope of the present invention insofar as not departing from the gist of the present invention.

For instance, the material constituting each of the first plate 11 and the second plate 12 is not always required to be the resin material and to be optically transparent. When at least one of the first plate 11 and the second plate 12 has optical transparency, at least part of the second flow path 33 through which the fluid having passed through the column 40 flows has optical transparency. Accordingly, a separation state of the fluid can be optically measured in the second flow path 33.

While, in the flow path chip 10, the first plate 11 and the second plate 12 are joined to each other by using the adhesive AD made of an n-alkane, the present invention is not limited to that case. The first plate 11 and the second plate 12 may be joined to each other by fusion or by forming a layer made of another adhesive between both the plates.

While, in the flow path chip 10, the entire first surface S1 and the entire second surface S2 are each formed by the surface of the easily-deformable layer 321, the present invention is not limited to that case. In another example, adhesivity of the column 40 to the storage portion 32 may be increased by causing the pressure adjustment portions 42 and 43 to be partially deformed, without forming the easily-deformable layers 321 in regions where the pressure adjustment portions 42 and 43 are positioned.

### Reference Signs List

- 10: flow path chip
- 11: first plate
- 12: second plate
- 31: first flow path
- 33: second flow path
- 21: inflow portion
- 22: outflow portion
- 32: storage portion
- FP: flow path
- 40, 40B: column (processing body)
- 41, 41B: porous body
- 42, 43: pressure adjustment portion
- 44: coating layer
- BP: bent portion
- S1: first surface
- S2: second surface
- 321: easily-deformable layer
- S11, S12: to-be-joined surface
- 121, 122: through-hole
- 131, 133, 231, 233: recess
- 132: first recess
- 232: second recess
- S21: surface of first recess 132
- S22: surface of second recess 232
- AD: adhesive
- ML: modified layer
- t1, t11: thickness of adhesive AD
- t2, t21: thickness of modified layer ML

## Claims

1. A flow path chip comprising a first plate, a second plate joined to the first plate, and a porous body disposed between the first plate and the second plate, the flow path chip having a flow path formed by the first plate and the second plate,
wherein the flow path includes a storage portion storing the porous body,
the storage portion is defined by a first surface formed by part of a surface of the first plate and a second surface formed by part of a surface of the second plate,
at least part of the first surface and at least part of the second surface are each a surface of an easily-deformable layer, and
the porous body is sandwiched between the first plate and the second plate in a state that at least part of the easily-deformable layer is deformed.

2. The flow path chip according to Claim 1, further comprising a coating layer disposed between the porous body and the easily-deformable layer and covering the porous body.

3. The flow path chip according to Claim 1 or 2, wherein the easily-deformable layer is made of a modified substance formed through modification of at least one of the first plate and the second plate by a modifier.

4. The flow path chip according to Claim 3, wherein the first plate and the second plate include a portion in which both the plates are joined to each other by an adhesive, and the adhesive is made of the modifier.

5. The flow path chip according to Claim 4, wherein the first plate and the second plate are each made of a polyolefin-based material, and the adhesive contains an alkane.

6. A manufacturing method for a flow path chip comprising a first plate having a first recess, a second plate having a second recess and joined to the first plate, and a porous body disposed between the first plate and the second plate, the flow path chip having a flow path formed by the first recess and the second recess, the flow path including a storage portion storing the porous body, the manufacturing method comprising:
a first coating step of coating an adhesive to join the first plate and the second plate on at least one of a to-be-joined surface of the first plate to the second plate and a to-be-joined surface of the second plate to the first plate, and a second coating step of coating the adhesive on at least part of a surface of the first recess and at least part of a surface of the second recess, and modifying at least part of the surface of the first recess and the surface of the second recess into a surface of an easily-deformable layer;
a loading step of disposing a stored member including the porous body to be positioned in contact with at least one of the surface of the first recess and the surface of the second recess; and
a joining step of joining the first plate and the second plate by contacting the to-be-joined surface of the first plate and the to-be-joined surface of the second plate with each other in an opposing relation, forming the flow path, which includes the storage portion storing the stored body, in a state that at least part of the easily-deformable layer is deformed by the stored member, and obtaining the flow path chip.

7. The manufacturing method for the flow path chip according to Claim 6, wherein the first coating step and the second coating step are performed as one step.

8. The manufacturing method for the flow path chip according to Claim 6 or 7, wherein characteristics of the formed easily-deformable layer are controlled by adjusting an amount of the adhesive per unit area coated on the at least part of the surface of the first recess and the surface of the second recess.
